Europäisches Patentamt

European Patent Office

Office européen des brevets

(11) Numéro de publication: **0 129 456**

**A2**

(12) **DEMANDE DE BREVET EUROPEEN**

(21) Numéro de dépôt: 84401055.3

(22) Date de dépôt: 22.05.84

(51) Int. Cl.³: **G 02 B 7/26**

(30) Priorité: 10.06.83 FR 8309654

(43) Date de publication de la demande:
27.12.84 Bulletin 84/52

(84) Etats contractants désignés:
DE GB IT

(71) Demandeur: SOCAPEX
10 bis, quai Léon Blum
F-92153 Suresnes(FR)

(72) Inventeur: Clement, Patrick
THOMSON-CSF SCPI 173, bld Haussmann
F-75379 Paris Cedex 08(FR)

(72) Inventeur: Malinge, Jean-Louis
THOMSON-CSF SCPI 173, bld Haussmann
F-75379 Paris Cedex 08(FR)

(72) Inventeur: Bouygues, Jean
THOMSON-CSF SCPI 173, bld Haussmann
F-75379 Paris Cedex 08(FR)

(74) Mandataire: Vesin, Jacques et al,
THOMSON-CSF SCPI 173, Bld Haussmann
F-75379 Paris Cedex 08(FR)

(54) Procédé et dispositif de centrage relatif d'une fibre optique et d'une lentille dans un embout, et élément de connecteur ainsi obtenu.

(57) L'invention concerne un procédé et un dispositif de centrage d'une lentille utilisable dans une connexion optique fibre-lentille.

Le dispositif comporte un rainure (40, 41) à profil en forme de V dans laquelle sont positionnés un embout (1) dans lequel est centrée avec précision une fibre optique (10) recevant la lumière d'un émetteur optique (12), une bague (2) destinée à recevoir la lentille (8) à centrer, une pièce de référence (6) portant un trou calibré (6') centré sur l'axe (xx') de la fibre optique et disposé devant un photo-détecteur (7). Le photo-

détecteur (7) est associé à un circuit de mesure (13). Un micro-manipulateur (4) présentant une pince (3) portant la lentille (9) est susceptible de déplacer celle-ci dans la bague (2) en vue de son centrage, est obtenu lorsque le signal délivré par le photo-détecteur (7) est maximal. En variante, la lumière émise est renvoyée dans la fibre par un miroir et détectée par un photo-détecteur couplé à la fibre optique. L'élément de connecteur associe une lentille et un embout montés ensemble par collage, après que leur centrage ait été réalisé avec précision.

FIG_2

*1*

## PROCEDE ET DISPOSITIF DE CENTRAGE RELATIF D'UNE FIBRE OPTIQUE ET D'UNE LENTILLE DANS UN EMBOUT, ET ELEMENT DE CONNECTEUR AINSI OBTENU

La présente invention a pour objet un dispositif de centrage d'une fibre optique et d'une lentille dans un embout, ainsi qu'un élément de connecteur ainsi obtenu.

On connaît déjà des dispositifs de couplage entre deux fibres optiques mettant en oeuvre une lentille transformant le faisceau lumineux divergent émis par la fibre correspondante en un faisceau parallèle. Les deux lentilles correspondantes sont disposées co-axialement en vis-à-vis l'une de l'autre et forment ainsi un système afocal.

Pour un tel dispositif de couplage, l'étude des pertes en fonction des paramètres d'alignement des lentilles et des fibres permet de conclure que les tolérances de positionnement de chaque lentille devant les fibres sont comparables aux tolérances de positionnement dans une connexion directe fibre à fibre. Il est par conséquent nécessaire d'aligner avec la meilleure précision possible l'axe optique de la fibre et celui de la lentille à laquelle elle est associée.

On connait par ailleurs des embouts de connecteurs à fibres optiques dans lesquels sont disposés avec précision au moins une fibre optique.

L'invention concerne un procédé et un dispositif de centrage relatif d'une fibre optique et d'une lentille, permettant le montage précis d'une lentille sur un embout du type précité, et assurant avec précision l'alignement entre l'axe de la fibre et l'axe de la lentille.

Le procédé de centrage relatif d'une lentille et d'un embout est caractérisé en ce qu'il comporte les étapes consistant à mettre en place un embout non équipé d'une fibre optique, à positionner à l'extrémité aval de l'embout un centreur, à introduire une fibre optique à travers l'embout et le centreur de telle sorte que la fibre soit maintenue centrée par le centreur, à introduire de la colle dans l'embout pour fixer la fibre en position, à éloigner le centreur, à cliver la fibre une fois que la colle a pris en masse, à introduire l'extrémité aval de l'embout dans une bague, à introduire la lentille dans la bague tout en laissant dépasser de celle-ci une portion de la lentille suffisante pour qu'elle puisse être prise entre les mors d'un micro-manipulateur, à positionner la lentille avec le micro-manipulateur de manière que l'extrémité de la fibre optique soit centrée au foyer de la lentille et l'axe de la fibre optique aligné avec l'axe optique de la lentille, le contrôle du positionnement étant assuré par un dispositif de mesure susceptible de recevoir de la lumière émise par la fibre optique et agencé de manière à produire un signal maximum lorsque la fibre a son extrémité centrée au foyer de la lentille et lorsque l'axe de la fibre optique est aligné avec l'axe optique de la lentille, et une fois le positonnement réalisé, de coller ensemble la bague, l'extrémité aval de l'embout et la lentille à l'aide d'une colle d'indice adapté.

L'embout et le centreur peuvent être positionnés selon un même axe de référence par rapport auquel est réalisé l'alignement de la fibre optique et de la lentille.

L'invention concerne également un dispositif de centrage relatif d'une lentille et d'une fibre optique caractérisé en ce qu'il comporte :

- un premier moyen de maintien pour maintenir en position un embout selon un axe de référence donné,

- un second moyen de maintien pour maintenir en position au moins une pièce d'assemblage selon ledit axe donné au niveau de l'extrémité de l'embout,

- une bague constituant une dite pièce d'assemblage et destinée à recevoir d'une part une extrémité aval de l'embout et d'autre part la lentille à centrer, et comportant un moyen pour fixer la lentille en position par rapport à l'embout et solidairement par rapport à la bague une fois qu'elle a été centrée,

- un dispositif optique susceptible de diriger les rayons lumineux émergeant de la lentille vers un photo-détecteur dans des

0129456

3

conditions telles que le signal délivré par le photo-détecteur est maximal lorsque la lentille a son axe optique confondu avec l'axe de référence (xx'),

    - un circuit de mesure du signal délivré par le photo-détecteur,

    - un micro-manipulateur présentant une pince portant ladite lentille et susceptible de la déplacer dans la bague en vue de son centrage, lequel est obtenu lorsque le signal délivré par le photo-détecteur est maximal.

    Selon une première variante, il comporte une rainure à profil en forme de V dans laquelle sont positionnés successivement d'une part un embout comportant une fibre optique recevant la lumière d'un émetteur optique, l'axe de la fibre étant confondu avec un axe de référence lorsque l'embout est disposé dans ladite rainure et d'autre part la bague. La rainure à profil en forme de V est avantageusement en deux parties alignées, respectivement amont et aval, et séparées par une logement recevant le micro-manipulateur et la pièce de référence est alors disposée dans la partie aval.

    Selon une deuxième variante destinée à un embout cylindrique, la dispositif est caractérisé en ce qu'il comporte une platine pésentant un alésage longitudinal tronconique dont l'axe est l'axe de référence, en ce que ledit premier moyen de maintien est une première pince présentant des mors dont la surface extérieure coopère avec l'alésage tronconique pour assurer le maintien en position de l'embout cylindrique selon l'axe de référence (xx'), en ce que ledit second moyen de maintien est une seconde pince présentant des mors dont la surface extérieure coopère avec l'alésage tronconique pour assurer le maintien en position d'une dite pièce d'assemblage selon l'axe de référence (xx'), une dite pièce d'assemblage étant d'une part un centreur cylindrique présentant un alésage central pour maintenir une extrémité de la fibre qui dépasse de l'embout cylindrique lors de l'opération de collage de la fibre dans l'embout, et d'autre part la bague. Une des pinces peut être mobile longitudinalement et peut être serrée grâce à un système d'avance vis-écrou. Une des pinces peut être solidaire d'une bride de centrage sur laquelle sont rigidement montés des tirants traversant longitudinalement la platine et dont l'extrémité opposée est solidaire d'une bride de verrouillage, la mobilité longitudinale et le serrage de la pince étant assurée par coopération entre des première rampes ménagées sur une face de la bride de verrouillage et des secondes rampes correspondantes ménagées dans un écrou de verrouillage disposé entre la bride de verrouillage et une face plane de la platine, de telle sorte que par rotation de l'écrou de verrouillage, ladite pince est alternativement verrouillée et déverrouillée.

Ledit dispositif optique peut être une pièce de référence portant un trou calibré centré sur l'axe de référence et disposé devant ledit photo-détecteur. Le dispositif optique peut être un miroir disposé perpendiculairement audit axe de référence de manière à réfléchir la lumière dans la fibre optique et le photo-détecteur est alors disposé à une sortie d'un coupleur auquel est raccordée la fibre optique et qui est disposé de manière à dériver vers ledit photo-détecteur ladite lumière réfléchie. Le moyen pour fixer en position la lentille dans la bague consiste avantageusement en de la résine injectée par un alésage pratiqué dans la bague lorsque la lentille a été centrée.

L'invention concerne enfin un élément de connecteur à fibre optique caractérisé en ce qu'il comporte un embout présentant une surface de référence par rapport à laquelle est centrée avec précision une fibre optique, et une bague enfilée sur l'extrémité de l'embout dans laquelle est disposée une lentille, l'extrémité de l'embout, la lentille et la bague étant solidarisés par une colle d'indice adapté dans une position où l'extrémité de la fibre est situé sensiblement à un foyer de la lentille de telle sorte que la lumière émise par la fibre sorte de la lentille sous forme de lumière parallèle. L'embout peut être prolongé à son extrémité aval par une zone cylindrique de diamètre réduit dans laquelle vient se loger la bague.

Le diamètre extérieur de la bague peut être tel qu'il s'inscrit complètement dans le contour de l'extrémité aval de l'embout, de telle sorte que l'élément de connecteur puisse être aisément mis en place et démonté par l'arrière.

Le diamètre intérieur de la bague est avantageusement sensiblement supérieur au diamètre extérieur de l'extrémité de l'embout et/ou au diamètre extérieur de la lentille de manière à faciliter les opérations d'alignement et de collage.

L'invention sera mieux comprise à la lecture de la description qui va suivre donnée à titre d'exemple non limitatif, en liaison avec les figures qui représentent :

- la figure 1a, un schéma de principe illustrant l'invention ;

- la figure 1b, la répartition de l'énergie lumineuse à la sortie d'une lentille couplée à une fibre optique ;

- la figure 2, en vue de profil, un mode de réalisation de l'invention ;

- la figure 3, en perspective, un exemple de réalisation selon la figure 2 avec enlèvement du micro-manipulateur ;

- la figure 4, en perspective, une variante du barillet de la figure 3 ;

- les figures 5 et 6, respectivement en vue de face et en vue latérale, une variante de montage du micro-manipulateur ;

- les figures 7 et 8, une variante de l'invention où l'alignement de la lentille met en oeuvre une réflexion optique ;

- les figures 9a et 10a, un dispositif selon l'invention adapté à un embout cylindrique ;

- les figures 9b et 10b, respectivement la coupe AA de la figure 9a et un détail de la figure 10a ;

- les figures 11a et 11b, respectivement en perspective éclatée et en vue latérale, un détail du dispositif des figures 9a et 10a adapté à la manoeuvre d'une pince de centrage à trois mors.

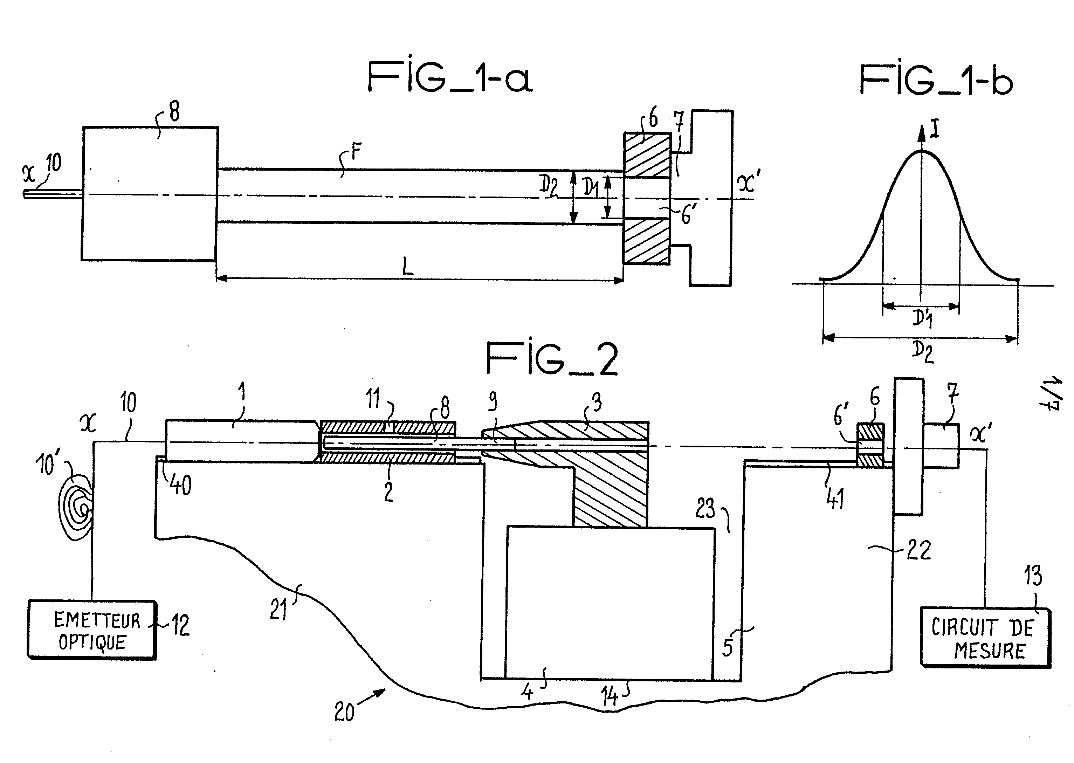

Selon la figure 1a, une lentille 8 est placée au contact d'une fibre optique 10 qui émet de la lumière et dont l'axe est confondu avec un axe de référence xx'. La lentille 8 est conçue de telle façon qu'elle transforme le faisceau lumineux émis par la fibre optique 10 en un faisceau $F$ pratiquement parallèle de diamètre $D_2$. La

lentille 8 peut-être ainsi une lentille barreau ou une lentille à gradient d'indice. A une distance L de la lentille 8, est disposée une pièce de référence 6 présentant une ouverture circulaire 6'. L'ouverture circulaire 6' est coaxiale à la fibre optique 10 et est placée devant un photo-détecteur 7. Le diamètre $D_1$ de l'ouverture 6' étant choisi inférieur au diamétre $D_2$ du faisceau F qui frappe la pièce de référence 6, l'énergie reçue par le photo-détecteur 7 sera dépendante de la position relative de l'axe optique de la lentille 8 par rapport à celui de l'axe de référence xx' commun à la fibre optique 10 et au trou calibré 6'. En fait, le photo-détecteur 7 recevra une quantité d'énergie lumineuse maximale lorsque l'axe de la lentille 8 coïncidera avec l'axe de référence xx'. Selon l'invention, on déplacera donc la lentille suivant deux axes yy' et zz' perpendiculaires à l'axe xx' jusqu'à ce qu'un maximum de lumière soit obtenu au niveau du photo-détecteur 7, ceci correspondant à l'alignement de l'axe de la fibre optique 10 avec l'axe optique de la lentille 8.

La figure 1b représente la répartition de l'énergie lumineuse I du faisceau F dans une direction perpendiculaire à l'axe xx'. La courbe obtenue est classiquement une gaussienne de largeur $D_2$. On a constaté qu'une sensibilité maximale du réglage de la position de la lentille était obtenue pour un diamètre $D_1$ du trou calibré 6' égal à la largeur à mi-hauteur de la gaussienne.

Selon la figure 2, un embout 1 dans lequel une fibre optique 10 a été positionnée est lui-même positionné dans une rainure en forme de V 40. On peut utiliser la rainure 40 en forme de V pour réaliser le montage in situ de la fibre 10 dans l'embout 1, grâce à l'adjonction d'un centreur dans la rainure 40, par exemple des cales permettant de définir un deuxième V, dont le fond est situé de telle sorte qu'une fibre qui repose dans ledit deuxième V a son axe confondu avec l'axe de référence xx' sur lequel les alignements ultérieurs doivent s'opérer. On se reportera en particulier à la demande de brevet français 79.31971 déposée le 28 décembre 1979 par la demanderesse. Une bague 2 est destinée à recevoir la lentille 8 à centrer. La fibre optique 10 dont l'axe est confondu, aux tolérances près, avec l'axe de référence xx', reçoit de la lumière d'un émetteur optique 12 auquel il est avantageusement relié grâce à l'interposition éventuelle d'une longueur standard de fibres optiques 10', par exemple 1 km permettant ainsi qu'il est connu de stabiliser les modes dans la fibre ce qui améliore la précision de l'alignement. La rainure 40 en forme de V est disposée dans une première platine 21 d'un bloc de centrage 20 dont une deuxième platine 22, séparée de la première par une ouverture 23 présente à sa partie supérieure une rainure 41 en forme de V qui est le prolongement de la rainure 40. Dans la rainure 41, est disposée la bague 6 derrière laquelle se trouve le photo-détecteur 7. Les signaux du photo-détecteur 7 sont analysés par un circuit de mesure 13. Dans l'ouverture 23 est disposé un micro-manipulateur 4 présentant une pince 3 dans laquelle est bloquée une extrémité 9 de la lentille 8 dépassant de la bague 2. L'axe de la pince 3 est parallèle à l'axe xx' de telle sorte que l'axe géométrique de la lentille 8, lui-même en principe parallèle a son axe optique, soit toujours parallèle à l'axe xx'. La bague 2 présente à sa partie supérieure un alésage 11 permettant, lorsque le centrage de la lentille a été réalisé, de fixer la position de celle-ci, de même que celle de l'extrémité avant de l'embout 1, avec une colle 15.

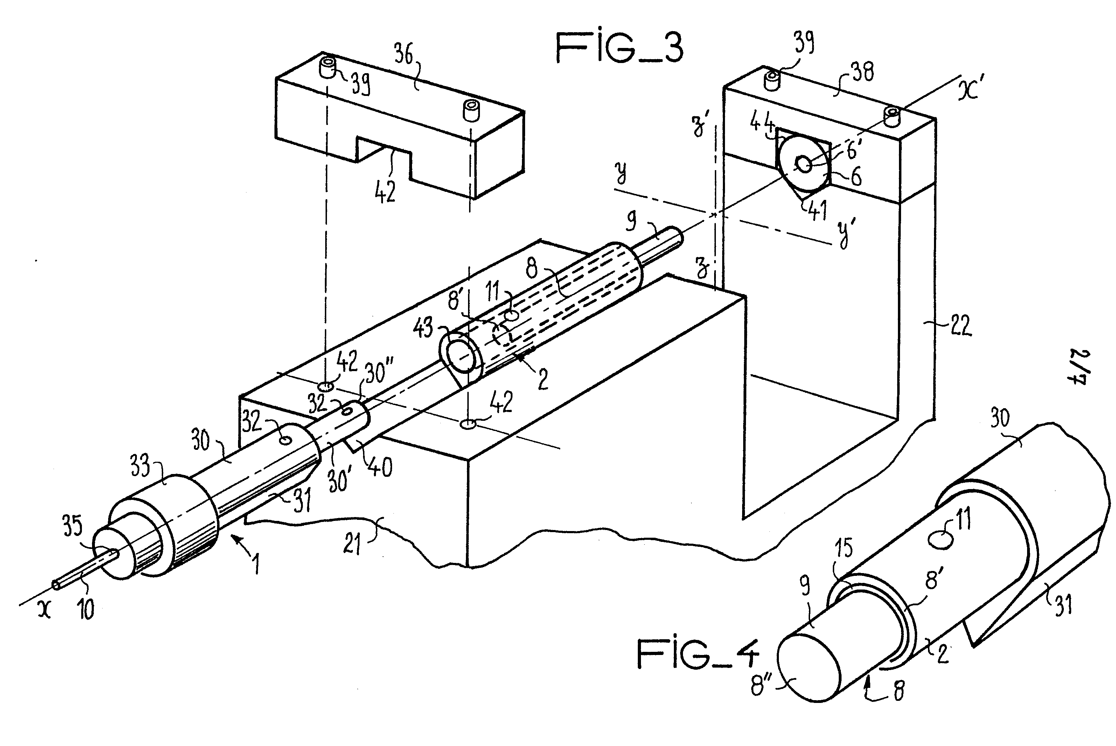

Selon la figure 3, l'embout 1 comporte une partie cylindrique avant 30 comportant un profil 31 en forme de V correspondant à celui de la rainure 40, et se continuant vers l'avant par un prolongement cylindrique 30' comportant un trou 32 dans lequel a été introduite de la colle maintenant en position la fibre 10 dont l'extrémité avant affleure à l'extrémité 30" de l'embout. L'embout 1 présente également une collerette 33 qui lui sert de butée sur la face latérale du prolongement 21. La fibre 10 émerge à l'arrière de l'embout 1 par un trou 35 ménagé dans une partie cylindrique arrière 34. L'embout 1 est maintenu en position par une bride 36 présentant à sa partie inférieure une ouverture rectangulaire 42 destiné à maintenir la partie cylindrique avant 30. La bride 36 est maintenue en place par des vis 39 venant se visser dans des taraudages 42 ménagés dans la face supérieure de la platine 21 de part et d'autre de la rainure 40.

8

La bague 2 est de forme générale cylindrique. Elle comporte un alésage longitudinal 43 de diamètre supérieur à celui du prolongement cylindrique 30'. La bague 2 n'a pas besoin d'être maintenue en position étant donné qu'elle n'a pour fonction que de fixer la position relative de la lentille 8 et de la fibre optique 1, un collage par introduction de colle d'indice étant prévu par injection par l'alésage 11. Le diamètre intérieur de la bague 2 est avantageusement sensiblement supérieur au diamètre extérieur de l'extrémité 30' de l'embout 1 et/ou au diamètre extérieur de la lentille 8 de manière à faciliter les opérations d'alignement et de collage.

La pièce de référence 6 est positionnée dans la rainure 41 située dans le prolongement de la rainure 40 de telle sorte que l'axe de son trou calibré 6' soit situé sur l'axe de référence xx' avec lequel la fibre optique 10 est également alignée. La pièce de centrage 6 est maintenue en place par une bride 38 pourvue d'un plan d'appui 44 de la pièce de centrage 6. La bride 38 est maintenue en place par des vis 39.

La figure 4 montre une variante de l'élément de connecteur dans lequel la bague 2, cylindrique de révolution, voit son diamètre extérieur s'inscrit complétement dans le contour de la partie cylindrique avant 30 et du profil en V 31, de telle sorte que lors du montage de l'élément de connecteur, le profil en V 31 soit dégagé et puisse exercer sans complication de montage sa fonction de surface de référence. La bague 2 peut être maintenue dans le V 40 par des cales ou bien être centrée par le prolongement cylindrique 30'.

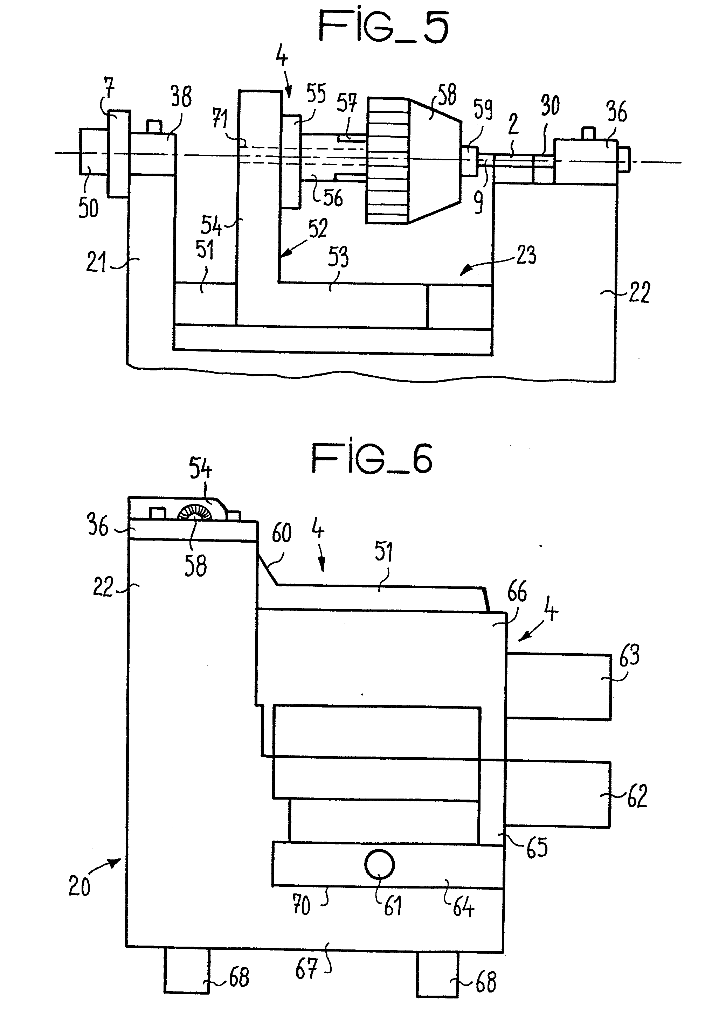

Suivant la figure 5, le micro-manipulateur comporte une platine 51. Une pièce en forme de L 52 est solidaire de cette platine et elle présente une portion horizontale 53 et une paroi verticale 54, cette dernière portant un système de mandrins à trois mors d'axe horizontal. Ce système comporte un axe 56 fixé par une bride 55 sur la paroi 54, ainsi qu'un filetage 57 sur lequel vient se monter un bouchon 58 permettant le serrage des trois mors 59. L'extrémité 9 de la lentille 8 qui dépasse de la bague 2 est bloquée par serrage dans les trois mors 59.

9

Selon la figure 6, la platine 51 peut-être déplacée parallèlement à l'axe xx' ainsi qu'à un axe horizontal yy' orthogonal à celui-ci aussi bien que verticalement suivant l'axe zz'. Pour ce faire, la platine 51 est associée à un plateau 66 dont le déplacement est commandé suivant l'un des axes précités par un vernier 63 et qui est lui-même raccordé à des coulisseaux 64 et 65 dont le déplacement est commandé par des verniers 61 et 62 suivant les deux autres directions précitées. La pièce de centrage 20 présente un prolongement 67 dont la face supérieure 70 sert de surface de référence pour le déplacement des plateaux du micro-manipulateur. Autrement dit, la face 70 est usinée de manière à être rigoureusement parallèle à l'axe des rainures 40 et 41.

L'opération de centrage de la lentille 8 dans la bague 2 est réalisée de la manière suivante :

Dans une première étape, la bague 2 est disposée dans la rainure 40, avec interposition de câles d'épaisseur adaptée.

Dans une deuxième opération la lentille 8 est glissée dans l'alésage 8' de la bague 2. Elle est ensuite glissée puis bloquée entre les trois mors du micro-manipulateur qui a été prépositionné à cet effet. L'embout 1 est ensuite mis en place dans la rainure 40 et fixé en position par la bride 36. Le micro-manipulateur est ensuite actionné de manière à déplacer la lentille 8 suivant l'axe xx' de telle sorte que l'extrémité de la lentille barreau 8 située du côté de la fibre optique 10 vienne pratiquement en contact avec celle-ci. Cette opération peut-être réalisée visuellement sous binoculaire, ou bien en déplaçant la lentille 8 jusqu'à ce qu'elle vienne mécaniquement en contact avec l'extrémité de l'embout 1 et en reculant ensuite celle-ci de manière à laisser un espace entre la lentille 8 et la fibre 10 tel que l'extrémité de la fibre optique 10 se retrouve dans le plan focal de la lentille barreau 8.

Cet intervalle subsistant va également permettre de déplacer ultérieurement la lentille 8 horizontalement parallèlement à l'axe yy' et verticalement parallèlement à l'axe zz' sans qu'il y ait frottement entre ces deux éléments optiques. La distance entre la fibre 10 et la lentille 8 ne procure qu'un très faible affaiblissement de la lumière transmise, étant donné que la lentille 8 va recevoir la quasi-totalité de la lumière divergente émise par la fibre selon un cône dont l'angle dépend de l'ouverture numérique de la fibre.

Le micro-manipulateur est alors actionné suivant un des deux axes yy' ou zz' jusqu'à ce qu'un maximum de lumière soit détecté par la cellule 7. A titre d'exemple la lentille 8 est une lentille barreau, le trou calibré 6' a un diamètre de 1 mm et est situé à une distance de 40 mm de la face de sortie de la lentille 8. Le micro-manipulateur est positionné sur ce maximum et la lentille 8 est déplacée suivant l'autre direction zz' ou yy' jusqu'à ce qu'un autre maximum soit obtenu. On peut éventuellement itérer ce processus autant que de besoin jusqu'à ce que le positionnement de la lentille soit correct. Après détermination de la bonne position de la lentille 8, de la colle d'indice est introduite par l'ouverture 11 de manière à fixer cette position. Le mors 59 et la bride 36 seront déserrés après prise en masse de la colle. De cette façon, l'axe optique de la lentille 8 aura été mis en coïncidence avec l'axe de la fibre optique 10. Le profil en forme de V 31 peut servir de surface de référence pour le montage ultérieur de l'ensemble fibre-lentille dans lequel la fibre et la lentille sont positionnées une fois pour toute avec précision.

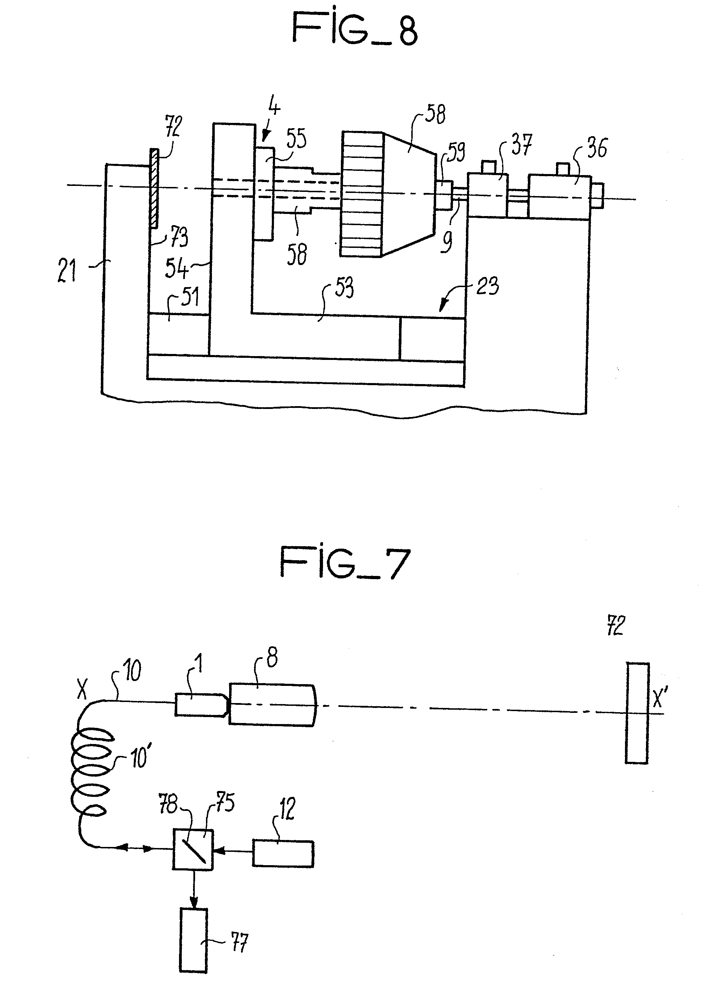

Selon la figure 7, le repérage de l'axe de la lentille 8 s'effectue non par transmission, mais par réflexion. A cet effet, un miroir 72 est disposé perpendiculairement à l'axe de référence selon lequel la fibre 10 est positionnée dans son embout 1 lorsque celui-ci est disposé dans la rainure 40 en forme de V. La lumière ainsi renvoyée dans la fibre 10 est dérivée par un coupleur 75 vers un photo-détecteur 77. Le coupleur 75 est également agencé de manière à laisser passer la lumière émise par la source 12. A cet effet, il peut comporter par exemple un miroir semi-réfléchissant 78. Selon le mode de réalisation de la figure 8, le système (7, 38, 4', 50) de la figure 5 est remplacé par un miroir 72 plaqué contre une paroi de référence 73 perpendiculaire à l'axe de la fibre 10 quand son embout est disposé dans la rainure 40.

Les opérations de centrage de la lentille peuvent être effectuées de la même façon que pour le mode de réalisation mettant en oeuvre un trou calibré, et le maximum de lumière renvoyée dans la fibre est obtenue lorsque l'axe de la fibre optique 10 est aligné avec l'axe optique de la lentille 8.

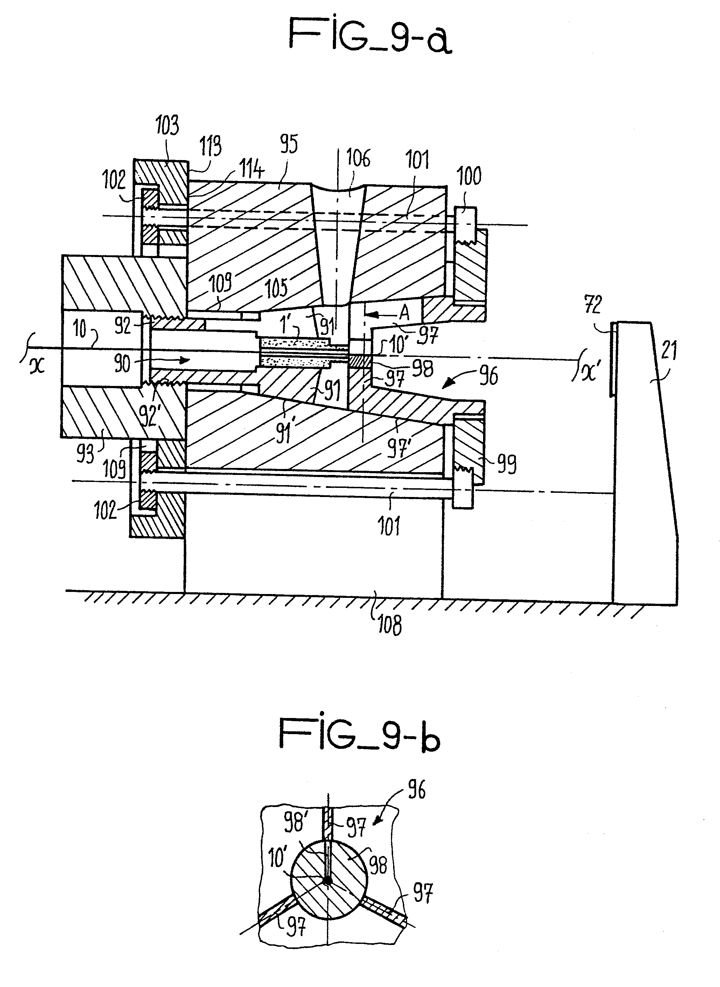

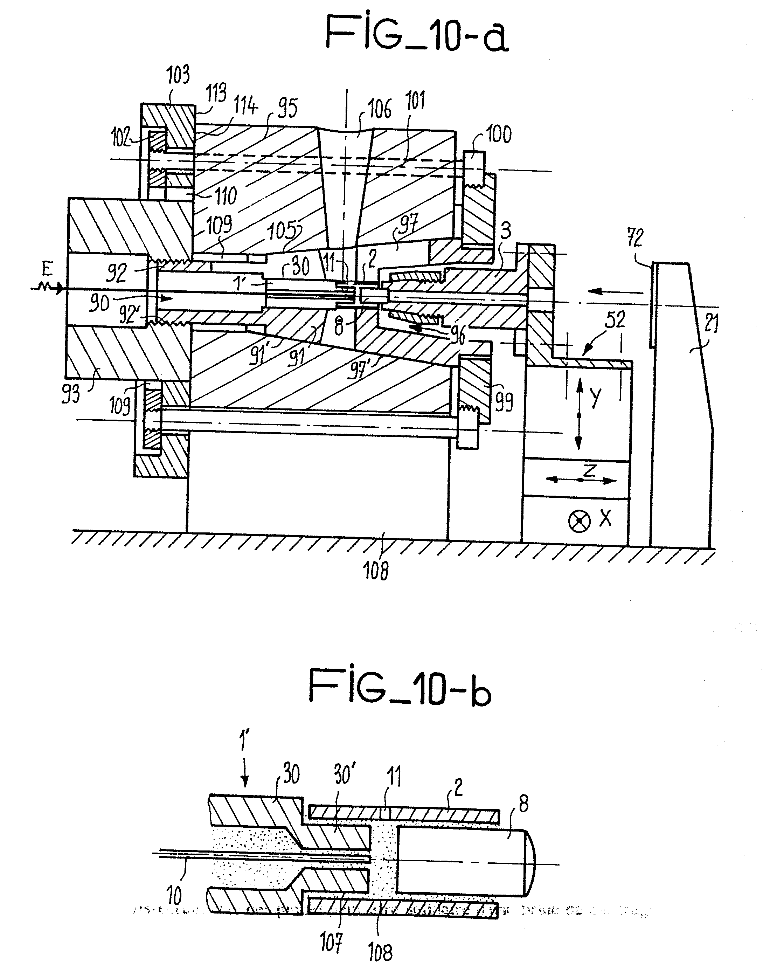

Les figures 9a, 9b, 10a et 10b représentent un dispositif adapté à la mise en oeuvre de l'invention dans le cas d'un embout cylindrique 1' et qui permet de réaliser d'une part le montage de la fibre dans l'embout, et d'autre part le centrage de la lentille par rapport à la fibre, l'ensemble étant fixé en position par de la colle d'indice. Dans cette variante également, on choisira avantageusement le diamètre intérieur de la bague sensiblement supérieur au diamètre extérieur de l'extrémité 30' de l'embout 1' et/ou au diamètre extérieur de la lentille 8.

Le dispositif comporte une platine 95 disposée sur une embase 108 rigide. La platine comporte une ouverture centrale présentant une portion cylindrique 109 qui se prolonge par une portion tronconique 105, qui lui est coaxiale et qui s'évase au fur et à mesure que la distance avec la portion cylindrique 109 augmente. L'axe commun à ces deux portions est l'axe xx' de référence pour l'alignement de la fibre optique et de la lentille.

La figure 9a montre le dispositif avec ses éléments positionnés en vue de réaliser la première opération consistant à centrer la fibre 10 dans l'embout cylindrique 1'. Celui-ci est maintenu en position par les mors 91 d'une pince 90 à trois mors. La pince 90 présente une partie arrière cylindrique 92. Chacun des mors 91 est pourvu d'un profil extérieur incliné 91' de telle sorte que, lorsque la pince 90 est refermée sur l'embout cylindrique 1', ces profils inclinés 91' forment avec l'axe de la pince un angle égal au demi-angle d'ouverture de la portion tronconique 105, laquelle sert donc de référence de positionnement pour la pince qui centre l'embout cylindrique 1' selon l'axe de référence xx'.

La mise en place de l'embout est rendue possible grâce à la coopération d'un filetage 92' ménagé à la partie arrière cylindrique 92 et d'un écrou 93.

12

Un positionneur cylindrique 98 fendu en 98' et pourvu d'une ouverture centrale de diamètre légèrement supérieur à celui de la fibre 10 et coaxiale à la surface extérieure du positionneur 98 est mis en place par une deuxième pince 96 introduite au niveau de la partie évasée de la portion tronconique 105. La pince 96 comporte trois mors 97 dont chacun est pourvu d'un profil extérieur incliné 97', de telle sorte que, lorsque la pince 96 est refermée sur le positionneur cylindrique 98, ces profils inclinés 91' forment avec l'axe de la pince un angle égal au demi-angle d'ouverture de la portion tronconique 105, laquelle sert également de référence de positionnement pour la pince. La pince centre le positionneur cylindrique 98 suivant l'axe de référence xx' tout en assurant un serrage élastique de l'extrémité 10' de la fibre 10 qui dépasse de l'embout 1'. Cette fonction d'élasticité est remplie par la fente 98.

Les pinces 90 et 96 coopèrent avec la portion tronconique 105 ce qui garantit une coaxialité maximale de l'embout et de la fibre.

La pince 96 est solidaire à sa partie arrière d'une bride de centrage 99 sur laquelle sont rigidement montés à une de leurs extrémités trois tirants 101 traversant longitudinalement la platine 95 et dont l'extrémité opposée est solidaire d'une bride de verrouillage 102. La bride de verrouillage 102 présente une ouverture centrale 109 laissant passage libre à l'écrou 93.

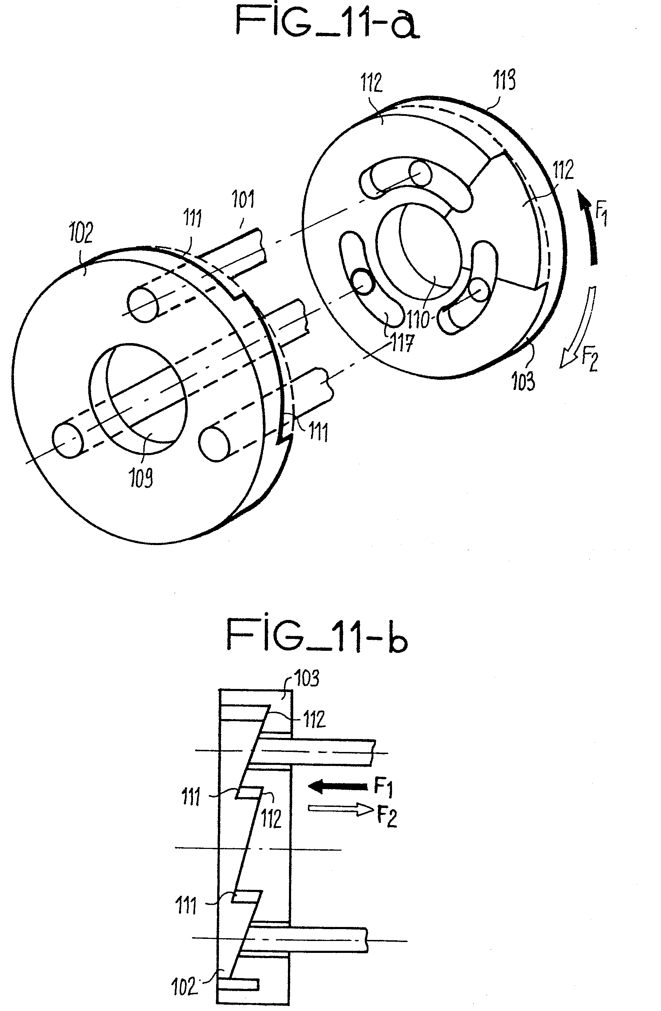

La bride de verrouillage 102 (voir figures 11a et 11b) porte des rampes inclinées 111 destinées à coopérer avec des rampes correspondantes 112 ménagées dans un écrou de verrouillage 103 pourvu d'une ouverture centrale 110 laissant libre passage à l'écrou 93. L'écrou de verrouillage 103 porte par une face plane 113 sur la face arrière plane 114 de la platine 95. Les tirants 101 traversent l'écrou de verrouillage 112 au niveau de saignées 117 permettant la libre rotation de l'écrou de verrouillage 117 selon un débattement angulaire permettant la coopération des rampes. La rotation angulaire de l'écrou de verrouillage 103 dans le sens indiqué par la flèche $F_1$ a pour effet d'éloigner la bride de verrouillage 102 de la face 114 et donc de déplacer la pince 96 dans le sens de la flèche A (sur les figures 9 et 10a). On notera que ce système de verrouillage peut être remplacé par tout autre dispositif mécanique utilisant notamment des leviers, des cames ou des coins et susceptible de produire un déplacement déterminé de la pièce qui assure le serrage de la pince.

Dans une première phase, l'écrou 93 est desserré et poussé en butée sur la face arrière place 114 de la platine 95. L'embout 1' est glissé entre les mors 91 et l'écrou 93 est serré jusqu'au blocage. Dans cette position, les profils extérieurs inclinés 91' des mors 91 portent sur toute leur longueur sur la portion tronconique 105 et l'axe de l'embout 1' est aligné sur l'axe de la pince qui coïncide avec l'axe xx' de la partie tronconique 105.

Dans une deuxième phase, le positionneur 98 est mis en place sans serrage effectif entre les mors 97. Il est pré-positonné de manière suffisante pour que son ouverture centrale soit suffisamment alignée avec l'embout 1' pour qu'une extrémité 10' de la fibre 10 puisse passer librement par son ouverture centrale. L'écrou de verrouillage 103 est ensuite serré (rotation dans le sens de la flèche $F_1$) de manière à serrer élastiquement l'extrémité 10' de la fibre 10 dans le positionneur 98.

Une colle est ensuite introduite dans l'ouverture 32 de l'embout 1'. Une cheminée 106 a été prévue à cet effet dans la platine 95. Après prise en masse de la colle, la pince 96 est desserrée (rotation de l'écrou de verrouillage 103 dans le sens de la flèche $f_1$) et la fibre 10 est clivée à l'extrémité de l'embout 1' et polie de manière connue.

Dans une troisième phase (voir figure 10a), la bague 2 est mise en place à l'aide de la pince 96 autour de l'extrémité cylindrique 30' de l'embout 1'. Le diamètre intérieur de la bague 2 peut être supérieur au diamètre de l'extrémité 30' étant donné que la bague 2 ne sert qu'à la solidarisation mécanique de l'embout 1' et de la lentille 8, et ne remplit pas de fonction de centrage. On présente ensuite la lentille 8 à l'intérieur de la bague 2 grâce au micro-manipulateur 3 et de la même façon que pour l'exemple de la figure 3. Le centrage de la lentille est également effectué de la même façon, par une méthode de maximum. C'est la variante des figures 7 et 8, mettant en oeuvre un miroir 72, qui est illustrée ici. Lorsque la position adéquate de la lentille 8 a été déterminée, une colle d'indice est introduite par l'ouverture 11 de la bague 2 de manière à figer définitivement la position de la lentille 8 par rapport à la fibre optique.

La quatrième phase consiste à dégager le micromanipulateur, puis la pince 96 après prise en masse de la colle, après quoi la pince 90 est également déverrouillée de manière à dégager l'embout 1' équipé de la lentille 8.

On notera à cet effet qu'il est préférable d'effectuer ce dégagement vers l'arrière et que, pour ce faire, il est préférable que la bague 2 ait un diamètre extérieur inférieur à celui de la partie cylindrique 30. Cette caractéristique est également avantageuse en ce qu'elle permet un montage ultérieur de l'embout 1' équipé par l'arrière, le centrage de l'embout équipé étant réalisé par rapport à la partie cylindrique 30 qui sert de référence.

0129456

15

<u>R E V E N D I C A T I O N S</u>

1. Procédé de centrage relatif d'une lentille et d'un embout caractérisé en ce qu'il comporte les étapes consistant à mettre en place un embout (1, 1'), non équipé d'une fibre optique, à positionner à l'extrémité aval de l'embout (1, 1') un centreur (98), à introduire une fibre optique (10) à travers l'embout (1, 1') et le centreur (98) de telle sorte que la fibre (10) soit maintenue centrée par le centreur (98), à introduire de la colle dans l'embout (1, 1') pour fixer la fibre (10) en position, à éloigner le centreur (98) et à cliver la fibre une fois que la colle a pris en masse, à introduire l'extrémité aval (30') de l'embout (1,1') dans une bague (2), à introduire la lentille (8) dans la bague (2) tout en laissant dépasser de celle-ci une portion de la lentille (8) suffisante pour qu'elle soit prise entre les mors (59) d'un micro-manipulateur (3), à positionner la lentille avec le micro-manipulateur de manière que l'extrémité de la fibre optique (10) soit au foyer de la lentille (8), et l'axe de la fibre optique aligné avec l'axe optique de la lentille (8) le contrôle du positionnement étant assuré par un dispositif de mesure (6, 7, 13) susceptible de recevoir de la lumière émise par la fibre optique (10) et agencé de manière à produire un signal maximum lorsque la fibre (10) à son extrémité centrée au foyer de la lentille (8) et lorsque l'axe de la fibre optique (10) est aligné avec l'axe optique de la lentille (8), et ensuite à coller ensemble la bague (2), l'extrémité aval de l'embout (1, 1') et la lentille (8) à l'aide d'une colle d'indice adapté.

2. Procédé selon la revendication 1, caractérisé en ce que l'embout et le centreur sont positionnés selon un même axe de référence (xx'), par rapport auquel est réalisé l'alignement de la fibre optique (10) et de la lentille (8).

3. Procédé selon une des revendications 1 ou 2, caractérisé en ce que l'étape d'introduire l'extrémité aval de l'embout (1, 1') dans une bague (2) consiste également à maintenir la bague (2) centrée par rapport à l'axe de référence (xx') la bague (2) ayant un diamètre intérieur supérieur à celui de l'extrémité (30) de l'embout.

4. Dispositif de centrage relatif d'une lentille et d'une fibre optique selon un axe de référence donné, caractérisé en ce qu'il comporte :

- un premier moyen de maintien (36, 90) pour maintenir un position un embout (1, 1') selon un axe de référence donné (xx'),

- un second moyen de maintien (40) pour maintenir en position au moins une pièce d'assemblage (2, 98) selon ledit axe donné (xx') au niveau de l'extrémité de l'embout,

- un bague (2) constituant une dite pièce d'assemblage et destinée à recevoir d'une part une extrémité aval de l'embout et d'autre part la lentille (8) à centrer, et comportant un moyen pour fixer la lentille (8) en position par rapport à l'embout et solidairement par rapport à la bague (2) une fois qu'elle a été centrée,

- un dispositif optique (6, 72) susceptible de diriger les rayons lumineux émergeant de la lentille (8) vers un photo-détecteur (7, 77) dans des conditions telles que le signal délivré par le photo-détecteur (7,77) est maximal lorsque la lentille (8) a son axe optique confondu avec l'axe de référence (xx'),

- un circuit de mesure (13) du signal délivré par le photo-détecteur (7),

- un micro-manipulateur (4) présentant une pince (3) portant ladite lentille (8) et susceptible de la déplacer dans la bague (2) en vue de son centrage, lequel est obtenu lorsque le signal délivré par le photo-détecteur (7) est maximal.

5. Dispositif selon la revendication 4, caractérisé en ce qu'il comporte une rainure à profil en forme de V (40, 41) dans laquelle sont positionnés successivement d'une part un embout comportant une fibre optique (10) recevant la lumière d'un émetteur optique (12), l'axe de la fibre étant confondu avec un axe de référence lorsque l'embout est disposé dans ladite rainure (40, 41), et d'autre part la bague (2), et en ce qu'il comporte un centreur constituant une autre dite pièce d'assemblage et définissant un V d'alignement de la fibre optique sur l'axe de référence (xx').

6. Dispositif selon la revendication 5, caractérisé en ce que la rainure à profil en forme de V est en deux parties (40, 41) alignées, respectivement amont (40) et aval (41), et séparées par un logement (23) recevant le micro-manipulateur et en ce que la pièce de référence (6) est disposée dans la partie aval (41).

7. Dispositif destiné à un embout cylindrique selon la revendication 4, caractérisé en ce qu'il comporte une platine (95) présentant un alésage longitudinal tronconique (105, 109)dont l'axe est l'axe de référence (xx'), en ce que ledit premier moyen de maintien est une première pince (90) présentant des mors (91) dont la surface extérieure (91') coopère avec l'alésage tronconique (105) pour assurer le maintien en position de l'embout cylindrique (1') selon l'axe de référence (xx'), en ce que ledit second moyen de maintien est une seconde pince (96) présentant des mors (97) dont la surface extérieure (97') coopère avec l'alésage tronconique (105) pour assurer le maintien en position d'une dite pièce d'assemblage (2, 98) selon l'axe de référence (xx'), une dite pièce d'assemblage étant d'une part un centreur cylindrique (98) présentant un alésage central pour maintenir une extrémité de la fibre (10) qui dépasse de l'embout cylindrique lors d'une opération de collage de la fibre dans l'embout, et d'autre part ladite bague (2).

8. Dispositif selon la revendication 7, caractérisé en ce qu'une des pinces (90, 96) est mobile longitudinalement et peut être serrée grâce à un système d'avance vis-écrou (92, 93).

9. Dispositif selon l'une des revendications 7 ou 8, caractérisé en ce qu'une des pinces (90, 96) est solidaire d'une bride de centrage (99) sur laquelle sont rigidement montés des tirants (101) traversant longitudinalement la platine (95) et dont l'extrémité opposée est solidaire d'une bride de verrouillage (102), la mobilité longitudinale et le serrage de la pince étant assurée par coopération entre des premières rampes (111) ménagées sur une face de la bride de verrouillage (102) et des secondes rampes correspondantes (112) ménagées dans un écrou de verrouillage (103) disposé entre la bride de verrouillage (102) et une face plane (113) de la platine (95), de telle sorte que, par rotation de l'écrou de verrouillage (103), ladite pince (90, 96) est alternativement verrouillée et déverrouillée.

10. Dispositif selon une des revendications 4 a 9, caractérisé en ce que ledit dispositif optique est une pièce de référence (6) portant un trou calibré (6') centré sur l'axe de référence et disposé devant ledit photo-détecteur (7).

11. Dispositif selon une des revendications 4 à 9, caractérisé en ce que le dispositif optique est un miroir (12) disposé perpendiculairement audit axe de référence de manière à réfléchir la lumière dans la fibre optique (10) et en ce que le photo-détecteur (77) est disposé à une sortie d'un coupleur (75) auquel est raccordée la fibre optique et qui est disposé de manière à dériver vers ledit photo-détecteur ladite lumière réfléchie.

12. Dispositif selon une des revendications 4 à 11, caractérisé en ce que le moyen pour fixer en position la lentille (8) dans la bague (2) consiste en de la résine injectée par un alésage (11) pratiqué dans la bague (2) lorsque la lentille a été centrée.

13. Elément de connecteur à fibre optique, comportant une fibre sur laquelle est disposé un embout (1, 1'), une bague (2) enfilée sur l'extrémité (30') de l'embout et dans laquelle est disposée une lentille (8), l'extrémité de la fibre (10) étant situé sensiblement à un foyer de la lentille (8) de telle sorte que la lumière émise par la fibre sorte de la lentille sous forme de lumière parallèle, caractérisé en ce que cet embout (1, 1') présente une surface de référence (30, 31) par rapport à laquelle est centrée cette fibre optique, l'extrémité (30') de l'embout, la lentille et la bague (2) étant solidarisées par une colle d'indice adapté.

14. Elément de connecteur selon la revendication 13, caractérisé en ce que l'embout (2) est prolongé à son extrémité aval par une zone cylindrique (30') de diamètre réduit dans laquelle vient se loger la bague (2).

15. Elément de connecteur selon la revendication 14, caractérisé en ce que le diamètre extérieur de la bague (2) est tel qu'il s'inscrive complétement dans le contour de l'extrémité aval (30) de l'embout.

16. Elément de connecteur selon une des revendications 13 à 15, caractérisé en ce que le diamètre intérieur de la bague (2) est sensiblement supérieur au diamètre extérieur de l'extrémité (30') de l'embout (1, 1') et/ou au diamètre extérieur de la lentille (8) de manière à faciliter les opérations d'alignement et de collage.

FIG_1-a

FIG_1-b

FIG_2

EMETTEUR OPTIQUE

CIRCUIT DE MESURE

0129456

FIG_3

FIG_4

0129456

# FIG_5

# FIG_6

# FIG_8

# FIG_7

# FIG_9-a

# FIG_9-b

FIG_10-a

FIG_10-b

# FIG_11-a

# FIG_11-b